# EUROPÄISCHE PATENTANMELDUNG

(11) **EP 2 416 018 A2**
(43) Veröffentlichungstag der Anmeldung: **08.02.2012**
(21) Anmeldenummer: 11006417.7
(22) Anmeldetag: 04.08.2011
(51) Int. Cl.: F16B 5/02, E04F 13/08

(54) **Abstandshalter**

(30) Priorität: 04.08.2010 DE 102010033418
(71) Anmelder: Fritz Rimmel, 87538 Bolsterlang (DE)
(72) Erfinder: Fritz Rimmel, 87538 Bolsterlang (DE)
(74) Vertreter: von Puttkamer, Nikolaus

(57) **Zusammenfassung**

Es wird ein Abstandshalter für die Befestigung eines Gegenstandes an einem eine Dämmschicht aufweisenden Untergrund angegeben, der zwei in axialer Richtung voneinander beabstandete Gewindehülsen (2,3) aufweist. Eine erste Gewindehülse (2) dient zur Aufnahme eines Ankerbolzens und eine zweite Gewindehülse (3) zur Aufnahme eines Justierbolzens. Der Abstandshalter weist eine an der Außenseite der zweiten Gewindehülse angebrachte, sich in radialer Richtung erstreckende, die Gewindehülsen in radialer Richtung überragende Abdeckkappe (4) auf.

## Beschreibung

Die Anmeldung betrifft einen Abstandshalter für die Befestigung eines Gegenstandes an einem eine Dämmschicht aufweisenden Untergrund.

Aus dem Stand der Technik sind unterschiedliche Ausführungsformen von Abstandshaltern zur Befestigung eines Gegenstandes an einem eine Dämmschicht aufweisenden Untergrund bekannt. Bei der Montage von Abstandshaltern in Dämmschichten oder in dem eine Dämmschicht aufweisenden Untergrund besteht häufig die Gefahr, dass durch deren Befestigung ungewollt Wärmebrücken entstehen. Um derartige wärmebrücken zu vermeiden, ist es aus dem Stand der Technik bekannt, derartige Abstandshalter aus Kunststoff auszubilden. Zur thermischen Trennung ist es des Weiteren bekannt, die Ankerbolzen zur Befestigung in dem Untergrund und die Befestigungsschraube zur Befestigung eines Gegenstandes mittels beispielsweise Kunststoffelementen voneinander zu beabstanden. Alternativ werden derartige Abstandshalter als Thermoelemente bezeichnet.

Aus der DE 102005022449 A1 und der DE 102009044748 A1 sind beispielsweise Abstandshalter für die Befestigung eines Gegenstandes an einem eine Dämmschicht aufweisenden Untergrund bekannt, die aus einem Ankerbolzen und einer an den Ankerbolzen aufgeschraubten Kunststoff-Abstandshülse bestehen, wobei die Abstandshülse eine Aufnahmebohrung für eine Befestigungsschraube aufweist.

Die aus dem Stand der Technik bekannten Abstandshalter weisen den Nachteil auf, dass sie das Bohrloch in der Dämmschicht bzw. in dem Untergrund nur unzureichend abdichten. Durch eine unzureichende Abdichtung kann Wasser in die Bohrung eindringen und zu Schäden am Untergrund führen.

Vor diesem Hintergrund liegt der Erfindung die Aufgabe zugrunde, einen Abstandshalter für die Befestigung eines Gegenstandes an einem eine Dämmschicht aufweisenden Untergrund anzugeben, der die aus dem Stand der Technik bekannten Nachteile vermeidet.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die Aufgabe ist bei einem Abstandshalter für die Befestigung eines Gegenstandes an einem eine Dämmschicht aufweisenden Untergrund gelöst, der zwei in axialer Richtung voneinander beabstandete Gewindehülsen umfasst. Eine erste der beiden Gewindehülsen dient hierbei zur Aufnahme eines Ankerbolzens und eine zweite Gewindehülse zur Aufnahme eines Justierbolzens. An der Außenseite der zweiten Gewindehülse ist eine Abdeckkappe angebracht. Die Abdeckkappe erstreckt sich in radialer Richtung und überragt die erste und die zweite Gewindehülse in radialer Richtung.

Der Abstandshalter weist im Bereich der Abdeckkappe vorzugsweise den größten Außendurchmesser auf.

Eine bevorzugte Ausführungsform des Abstandshalters ist dadurch gekennzeichnet, dass an der Unterseite der Abdeckkappe, in Richtung der den Ankerbolzen aufnehmenden ersten Gewindehülse, ein Dichtungselement angeordnet ist. Vorzugsweise ist das Dichtungselement ringförmig ausgebildet. Das Dichtungselement ist beispielsweise durch ein ringförmiges Kunststoffelement gebildet. Vorzugsweise ist das Dichtungselement elastisch ausgebildet und komprimierbar, so dass es an nahezu jede beliebige Oberfläche der Dämmschicht anpassbar ist. Mit Hilfe der Abdeckkappe und dem Dichtungselement wird erreicht, dass das Bohrloch gegen eindringende Feuchtigkeit geschützt ist. Die Abdeckkappe deckt das Bohrloch vorzugsweise vollständig ab. Gegen seitlich eindringende Feuchtigkeit ist die Abdeckkappe vorzugsweise mittels eines oder mehrerer Dichtelemente abgedichtet.

Eine bevorzugte Ausführungsform des Abstandshalters ist dadurch gekennzeichnet, dass dieser als einstückiges Bauteil ausgebildet ist. Die Abdeckkappe ist vorzugsweise zusammen mit den beiden Gewindehülsen einstückig ausgebildet. Der Abstandshalter ist beispielsweise mittels eines Spritzgussverfahrens oder eines anderen geeigneten Herstellungsverfahrens herstellbar.

Eine weitere bevorzugte Ausführungsform des Abstandshalters ist dadurch gekennzeichnet, dass die Abdeckkappe lösbar an der zweiten Gewindehülse angeordnet ist. Vorzugsweise ist die Abdeckkappe mittels eines Gewindes auf die zweite Gewindehülse aufgebracht. Beispielsweise weist die Abdeckkappe in axialer Richtung einen Abschnitt aufweisend ein Gewinde auf. Mittels des Gewindes ist die Abdeckkappe an einem entsprechenden Gewindeabschnitt der zweiten Gewindehülse lösbar anordenbar. Der Gewindeabschnitt an der zweiten Gewindehülse erstreckt sich vorzugsweise ausgehend von dem Außenseitigen Ende des Abstandshalters wenige Zentimeter in Richtung erster Gewindehülse. Das Gewinde an der Abdeckkappe ist beispielsweise als Innengewinde ausgebildet, das Gewinde an der zweiten Gewindehülse als Außengewinde. Alternativ weist die Abdeckkappe ein Außengewinde auf, das an einem Innengewinde der zweiten Gewindehülse aufschraubbar ist. Vorzugsweise weist das Innengewinde der zweiten Gewindehülse hierzu einen Gewindeabschnitt auf, der einen Gewindedurchmesser aufweist, der den Gewindedurchmesser der in die zweite Gewindehülse einschraubbare Justierschraube wenigsten soweit überragt, dass durch die Öffnung in der Abdeckkappe die in die zweite Gewindehülse einschraubbare Justierschraube eingeführt werden kann. Bei einer lösbar angeordneten Abdeckkappe kann diese nachträglich justiert werden, ohne dass dazu der Abstandshalter als solcher in axialer Richtung in seiner Position verändert werden muss. Eine weitere bevorzugte Ausführungsform des Abstandshalters ist dadurch gekennzeichnet, dass zwischen der ersten Gewindehülse und der zweiten Gewindehülse ein Trennsteg angeordnet ist. Der Trennsteg trennt die beiden Gewindehülsen in axialer Richtung voneinander, so dass zwischen dem in die erste Gewindehülse eingebrachten Ankerbolzen und dem in die zweite Gewindehülse eingebrachten Justierbolzen keine Wärmebrücke entstehen kann. Der Trennsteg zwischen den beiden Gewindehülsen besteht vorzugsweise aus einem Material, das eine sehr geringen Wärmeleitkoeffizienten aufweist.

Eine bevorzugte Ausführungsform des Abstandshalters ist dadurch gekennzeichnet, dass der Trennsteg zwischen der ersten und zweiten Gewindehülse wenigstens eine Bohrung aufweist. Bei einer Ausführungsform des Abstandshalters mit einer Bohrung im Trennsteg ist es beispielsweise möglich, den in der ersten Gewindehülse eingebrachten Ankerbolzen mittels eines über die zweite Gewindehülse und durch die Bohrung des Trennstegs eingebrachtes Werkzeug zu bearbeiten. So kann beispielsweise der Ankerbolzen an seinem in die erste Gewindehülse eingebrachten Ende eine Aufnahme für einen Innensechskant aufweisen. Mittels eines Inbusschlüssels kann der Ankerbolzen somit nachträglich in der Einschraubtiefe verändert werden.

Vorzugsweise weist die Bohrung des Trennsteges einen geringeren Durchmesser auf als der kleinste Innendurchmesser der ersten oder zweiten Gewindehülse. Der Trennsteg mit einer oder mehreren Bohrungen weist vorzugsweise im Randbereich genügend Material auf um als Anschlag für den eingebrachten Ankerbolzen oder den Justierbolzen zu dienen.

Eine weitere bevorzugte Ausführungsform des Abstandshalters ist dadurch gekennzeichnet, dass diese, vorzugsweise am Ende der ersten Gewindehülse, eine sich in Richtung des Ankerbolzens verjüngende Außenkontur aufweist. Vorzugsweise weist der Abstandshalter unterhalb der Abdeckkappe, in Richtung Ankerbolzen, eine möglichst glatte und möglichst strukturfreie Oberfläche auf. Durch eine sich verjüngende Außenkontur, die eine möglichst glatte Oberfläche aufweist kann der Abstandshalter relativ leicht in das Bohrloch in der Dämmschicht eingebracht werden. Durch die Verschraubung der ersten Gewindehülse mit dem in den Untergrund eingebrachten Ankerbolzen kann der Abstandshalter ausreichend fest in der Dämmschicht fixiert werden.

Der Abstandshalter weist bei einer weiteren bevorzugten Ausführungsform eine abgestuft konische Außenkontur auf. Vorzugsweise ist der Endbereich in Richtung der den Ankerbolzen aufnehmenden ersten Gewindehülse stärker nach innen geneigt als der restliche Bereich des Abstandshalters. Durch eine stärkere Neigung nach Innen im Endbereich der ersten Gewindehülse kann der Abstandshalter leichter in die Bohrung der Dämmschicht eingebracht werden. Durch die sich in Richtung Abdeckkappe konisch erweiternde Außenkontur des Abstandshalters wird das Bohrloch in der Dämmschicht im Durchmesser leicht erweitert. Das Material der Dämmschicht wird hierbei im Randbereich des Bohrloches komprimiert und fixiert den Abstandshalter dadurch lateral in der Dämmschicht.

Eine weitere bevorzugte Ausführungsform des Abstandshalters ist dadurch gekennzeichnet, dass die Außenkontur der zweiten Gewindehülse in Richtung des Justierbolzens, oberhalb der Abdeckkappe, eine Werkzeugaufnahme aufweist oder in Form einer Werkzeugaufnahme ausgebildet ist. Über ein an der Werkzeugaufnahme angreifendes geeignetes Werkzeug kann der Abstandshalter leicht auf dem in dem Untergrund verankerten Ankerbolzen aufgeschraubten werden.

Vorzugsweise ist die Werkzeugaufnahme als Außensechskant ausgebildet. Über einen Außensechskant kann der Abstandshalter beispielsweise mittels eines Drehmomentschlüssels mit einem bestimmten Drehmoment auf den Ankerbolzen aufgeschraubt werden.

Vorzugsweise besteht der Abstandshalter aus Kunststoff oder einem Verbundwerkstoff. Bevorzugt ist der Abstandshalter mittels eines Spritzgussverfahrens hergestellt. Der Abstandshalter ist vorzugsweise aus einem thermisch isolierenden Material hergestellt.

Durch die zuvor beschriebenen Ausführungsformen des erfindungsgemäßen Abstandshalters wird erreicht, dass kein Wasser in die Bohrung eindringen und zu Schäden am Untergrund führen kann. Des Weiteren wird die Abdichtung der Bohrung erfindungsgemäß durch einen Abstandshalter erreicht, der einen einfachen und kostengünstig herstellbaren Aufbau aufweist. Bei dem erfindungsgemäßen Abstandshalter wird durch die Kombination aus thermischer Trennung der zwei Gewindehülsen und der Abdeckkappe zur Abdichtung des Bohrloches in der Dämmschicht wird ein besonders guter Schutz gegen eindringende Kälte und Feuchtigkeit erreicht.

Weitere Vorteile, Merkmale und Einzelheiten der Erfindung ergeben sich aus der nachfolgenden Beschreibung, in der unter Bezugnahme auf die Zeichnungen verschiedene Ausführungsbeispiele im Einzelnen beschrieben sind.

Es zeigen:
- Figur 1: eine Seitenansicht einer ersten Ausführungsform des erfindungsgemäßen Abstandshalters,
- Figur 2: eine Schnittansicht des Abstandshalters entlang der Schnittachse A-A gemäß Figur 1,
- Figur 3a und 3b: verschiedene dreidimensionale Ansichten des Abstandshalters gemäß Figur 1 bzw. Figur 5,
- Figur 4: eine Draufsicht des Abstandshalters mit Blick auf die zweite Gewindehülse, und
- Figur 5: eine weitere Ausführungsform des Abstandshalters in Schnittdarstellung.

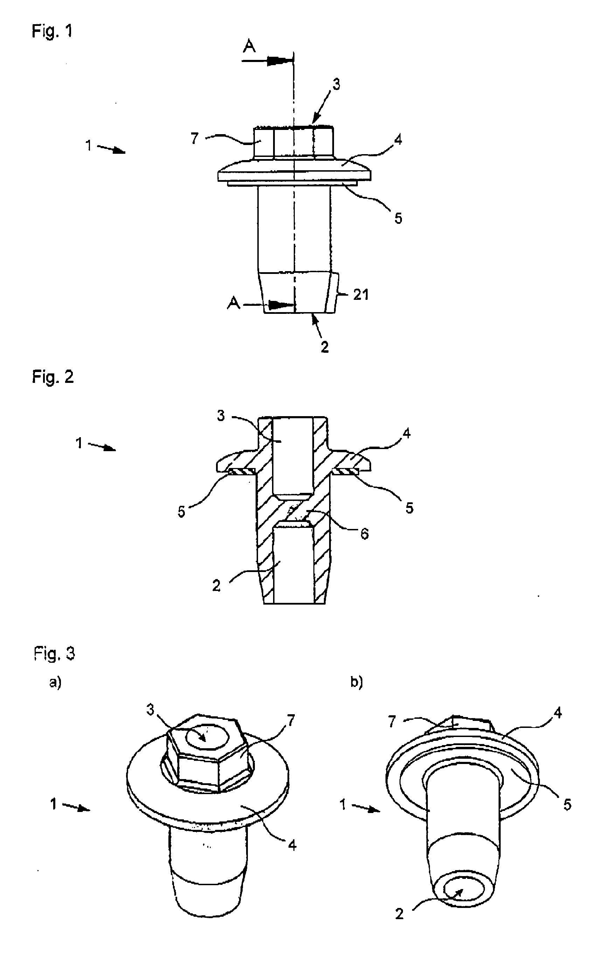

In Figur 1 ist eine Seitenansicht einer ersten Ausführungsform des erfindungsgemäßen Abstandshalters 1 dargestellt. Der Abstandshalter 1 umfasst eine erste Gewindehülse 2 und eine zweite Gewindehülse 3. Die erste 2 und die zweite 3 Gewindehülse sind voneinander durch einen Trennsteg 6 getrennt, wie dies in der in Figur 2 dargestellten Schnittansicht des Abstandshalters 1 dargestellt ist. Die erste Gewindehülse 2 dient zur Aufnahme eines Ankerbolzens, der in einem eine Dämmschicht aufweisenden Untergrund verankerbar ist. Die zweite Gewindehülse 3 dient zur Aufnahme eines Justierbolzens an dem beispielsweise ein Regenrohrhalter befestigt werden kann. Durch den Abstandshalter 1 lässt sich der Abstand des Regenrohrhalters von der Dämmschicht ohne Veränderung des Ankerbolzens leicht einstellen. Um den Abstand zu verändern ist es ausreichend, die Einschraubtiefe des Justierbolzens in der zweiten Gewindehülse 3 des Abstandshalters 1 zu verändern.

Der Abstandshalter 1 weist im Bereich der zweiten Gewindehülse 3 eine Abdeckkappe 4 auf. Die Abdeckkappe 4 dient zur Abdeckung des Bohrlochs in der Dämmschicht. Der Abstandshalter 1 ist hierbei bis zu der Abdeckkappe 4 in einem Bohrloch in der Dammschicht auf beispielsweise einen Ankerbolzen aufgeschraubt. Die Abdeckkappe 4 liegt an der Außenseite der Dämmschicht an. Zur Verbesserung der Abdichtung weist die in Figur 1 dargestellte Ausführungsform des Abstandshalters 1 ein Dichtungselement 5 auf der Unterseite der Abdeckkappe 4 auf. Mit Hilfe des Dichtungselementes 5 kann die Abdichtung des Abstandshalters 1 an der Außenseite der Dämmschicht weiter verbessert werden. Das vorzugsweise ringförmige Dichtungselement 5 besteht vorzugsweise aus einem elastischen Material. Das elastische Dichtungselement 5 passt sich an die Oberfläche der Dämmschicht an und dichtet das Bohrloch gegen eindringende Feuchtigkeit ab.

Der Abstandshalter 1 weist im Bereich der ersten Gewindehülse 2 in Richtung des Ankerbolzens einen konisch ausgebildeten Endbereich 21 auf. Über den konischen Endbereich 21 lässt sich das Bohrloch in der Dämmschicht leicht aufweiten wodurch das Dämmmaterial im Randbereich des Bohrloches komprimiert wird und auf den Abstandshalter 1 drückt und diesen dadurch in dem Bohrloch in lateraler Richtung fixiert.

Der Endbereich der zweiten Gewindehülse 3 ist als Werkezugsaufnahme 7 ausgebildet. In der dargestellten Ausführungsform ist die Werkzeugaufnahme 7 als Außensechskant ausgebildet. Über die Werkzeugaufnahme 7 kann der Abstandshalter 1 mittels eines geeigneten Werkzeugs, beispielsweise eines Maulschlüssels, leicht auf den Ankerbolzen aufgeschraubt werden.

In Figur 2 ist eine Schnittansicht entlang der Schnittachse A-A gemäß der in Figur 1 dargestellten Ausführungsform des Abstandshalters 1 dargestellt. In Figur 2 ist der Trennsteg 6 zwischen der ersten Gewindehülse 2 und der zweiten Gewindehülse 3 zu erkennen. Der Trennsteg 6 trennt den in der ersten Gewindehülse 2 eingebrachten im Untergrund fixierten Ankerbolzen von dem an der Außenseite in der zweiten Gewindehülse 3 eingebrachten Justierbolzen thermisch ab. Durch den Trennsteg 6 wird eine Wärmebrücke zwischen dem eingebrachten Ankerbolzen auf der Innenseite und dem Justierbolzen auf der Außenseite verhindert.

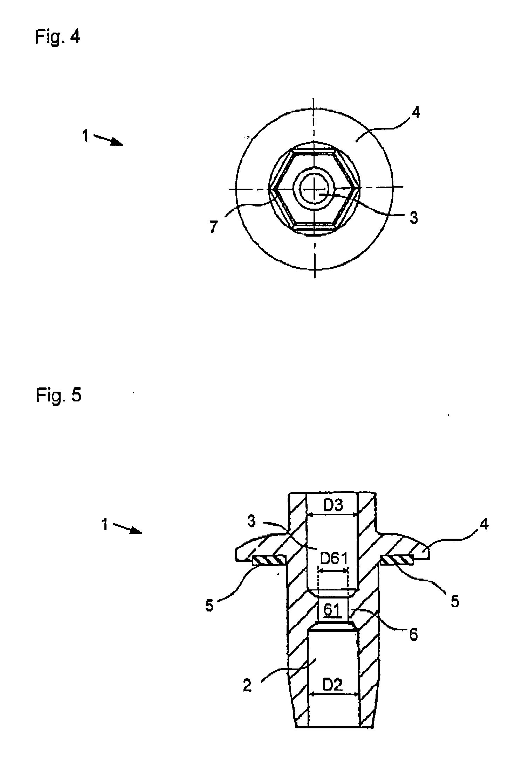

In Figur 3a und 3b sind verschiedene dreidimensionale Ansichten gemäß der in den Figuren 1 bzw. 5 abgebildeten Ausführungsformen der Abstandshalter 1 dargestellt. Der Abstandshalter 1 ist einstückig ausgebildet. Das Dichtungselement 5 ist vorzugsweise als separates Bauteil ausgebildet und nachträglich auf den Abschnitt des Abstandshalters 1 unter der Abdeckkappe aufschiebbar.

In Figur 4 ist eine Draufsicht des Abstandshalters 1 mit Blick auf die zweite Gewindehülse 3 und die Abdeckkappe 4 dargestellt. Die Abdeckkappe 4 ist vorzugsweise rotationssymmetrisch ausgebildet. Die Abdeckkappe 4 überragt die Gewindehülsen 2 und 3 in radialer Richtung. Der Abstandshalter 1 weist im Bereich der Abdeckkappe 4 den größten Außendurchmesser auf.

In Figur 5 ist eine weitere Ausführungsform des Abstandshalters 1 in Schnittansicht dargestellt. Bei der in Figur 5 dargestellten Ausführungsform des Abstandshalters 1 ist der Trennsteg 6 zwischen der ersten Gewindehülse 2 zur Aufnahme eines Ankerbolzens und der zweiten Gewindehülse 3 zur Aufnahme eines Justierbolzens mittels einer Bohrung 61 durchbrochen. In den Bohrungen befindet sich Luft, die als thermischer Isolator dient und Wärmebrücken verhindert. Der Durchmesser 61 der Bohrung 6 ist hierbei vorzugsweise kleiner als der kleinste Innendurchmesser D2 der ersten Gewindehülse 2 und der kleineste Innendurchmesser D3 der zweiten Gewindehülse 3. Der Randbereich des Trennstegs 6 um die Bohrung 61 bildet einen Anschlag für den in die erste Gewindehülse 2 eingebrachten Ankerbolzen beziehungsweise für den in der zweiten Gewindehülse 3 eingebrachten Justierbolzen. Beispielsweise beträgt der Durchmesser D61 der Bohrung 6, bei einem Innendurchmesser D2 der ersten Gewindehülse 2 bzw. bei einem Innendurchmesser D3 der zweiten Gewindehülse 3 von ca. 10 mm, vorzugsweise ca. 5 bis 6 mm. Bei einem Innendurchmesser D2 der ersten Gewindehülse 2 bzw. bei einem Innendurchmesser D3 der zweiten Gewindehülse 3 von ca. 8 mm, beträgt beispielsweise der Durchmesser D61 der Bohrung 6 vorzugsweise ca. 4 bis 5 mm.

Vorzugsweise ist die Bohrung 61 in dem Trennsteg 6 mittig angeordnet. Durch die Bohrung 61 kann an dem Ende des Ankerbolzens, das in der ersten Gewindehülse 2 eingebracht ist, an einer Werkzeugaufnahme des Endes ein geeignetes werkzeug angreifen. Beispielsweise kann der Ankerbolzen eine Innensechskantaufnahme aufweisen in die, über die zweite Gewindehülse 3 und die Bohrung 61 in dem Trennsteg 6 ein Inbusschlüssel eingeführt werden kann.

Bei der in Figur 5 dargestellten Ausführungsform des Abstandshalters 1 weist der Trennsteg 6 nur eine Bohrung 61 auf. Es ist jedoch möglich, dass der Trennsteg 6 mehrere Bohrungen 61 aufweist. Die Bohrungen können zentral oder dezentral angeordnet sein. Vorzugsweise verbleibt von dem Trennsteg 6 ausreichend Material um als Anschlag für den eingebrachten Ankerbolzen beziehungsweise für den Justierbolzen zu dienen.

Die Form des Abstandshalters 1 ist nicht auf die in den Figuren 1 bis 5 dargestellte Ausführungsformen beschränkt, sondern kann jede geeignete Form aufweisen. Insbesondere kann die Form der Abdeckkappe 4 von der in den Figuren 1 bis 5 dargestellten Form abweichen. Die in den Figuren 1 bis 5 dargestellten Ausführungsformen des Abstandshalters sind einstückig ausgebildet. Die Abdeckkappe kann jedoch auch lösbar, beispielsweise mittels eines Gewindes an der zweiten Gewindehülse angebracht sein.

### Bezugszeichenliste

- 1: Abstandshalter
- 2: erste Gewindehülse
- 21: konischer Endbereich
- 3: zweite Gewindehülse
- 4: Abdeckkappe
- 5: Dichtungselement
- 6: Trennsteg
- 61: Bohrung
- 7: Werkzeugaufnahme

- D2: Innendurchmesser der ersten Gewindehülse
- D3: Innendurchmesser der zweiten Gewindehülse
- D61: Durchmesser der Bohrung

- A-A: Schnittachse

## Patentansprüche

1. Abstandshalter für die Befestigung eines Gegenstandes an einem eine Dämmschicht aufweisenden Untergrund,
umfassend
zwei in axialer Richtung voneinander beabstandete Gewindehülsen (2, 3), wobei eine erste Gewindehülse (2) zur Aufnahme eines Ankerbolzens und eine zweite Gewindehülse (3) zur Aufnahme eines Justierbolzens dient,
wobei an der Außenseite der zweiten Gewindehülse (3) eine sich in radialer Richtung erstreckende, die Gewindehülsen (2, 3) in radialer Richtung überragende Abdeckkappe (4) angeordnet ist.

2. Abstandshalter nach Anspruch 1,
bei dem an der Unterseite der Abdeckkappe (4), in Richtung des Ankerbolzens, ein Dichtungselement (5) angeordnet ist.

3. Abstandshalter nach einem der vorherstehenden Ansprüche,
der als einstückiges Bauteil ausgebildet ist.

4. Abstandshalter nach einem der Ansprüche 1 oder 2,
bei dem die Abdeckkappe (4) lösbar an der zweiten Gewindehülse (3) angeordnet ist.

5. Abstandshalter nach einem der vorherstehenden Ansprüche,
bei dem zwischen der ersten (2) und der zweiten (3) Gewindehülse ein Trennsteg (6) angeordnet ist.

6. Abstandshalter nach Anspruch 5,
bei dem der Trennsteg (6) wenigstens eine Bohrung (61) aufweist.

7. Abstandshalter nach Anspruch 6,
bei dem die Bohrung (61) einen geringeren Durchmesser (D61) aufweist als der kleinste Innendurchmesser (D2, D3) der ersten (2) und/oder zweiten (3) Gewindehülse.

8. Abstandshalter nach einem der vorherstehenden Ansprüche,
der eine sich in Richtung des Ankerbolzens verjüngende Außenkontur aufweist.

9. Abstandshalter nach Anspruch 7,
der eine abgestuft konische Außenkontur aufweist.

10. Abstandshalter nach einem der vorherstehenden Ansprüche,
bei dem die Außenkontur der zweiten Gewindehülse (3) in Richtung des Justierbolzens oberhalb der Abdeckkappe (4) eine Werkzeugaufnahme (7) aufweist.

11. Abstandshalter nach Anspruch 10,
bei dem die Werkzeugaufnahme (7) als Außensechskant ausgebildet ist.

12. Abstandshalter nach einem der vorherstehenden Ansprüche,
der aus Kunststoff oder einem Verbundwerkstoff besteht und vorzugsweise durch Spritzgießen hergestellt ist.
